# EUROPEAN PATENT APPLICATION

(11) **EP 4 692 218 A1**
(43) Date of publication of application: **11.02.2026**
(21) Application number: 24780096.4
(22) Date of filing: 25.03.2024
(51) Int. Cl.: C08L 23/34, B29C 41/14, B29C 41/36, C08K 5/00, C08K 5/42

(54) **CHLOROSULFONATED POLYOLEFIN LATEX**

(30) Priority: 30.03.2023 JP 2023055775; 05.10.2023 JP 2023173659
(71) Applicant: Sumitomo Seika Chemicals Co., Ltd., Kako-gun, Hyogo 675-0145 (JP)
(72) Inventor: KAKUTAKA, Ikumi, Himeji-shi, Hyogo 672-8076 (JP); NISHIOKA, Kiyoshi, Himeji-shi, Hyogo 672-8076 (JP)
(74) Representative: Vossius & Partner Patentanwälte Rechtsanwälte mbB
(86) International application number: PCT/JP2024/011541
(87) International publication number: WO 2024/203978

(57) **Abstract**

Provided is a means for producing a dip-molded article comprising a chlorosulfonated polyolefin without using sodium alginate or the like.

More specifically, provided is a chlorosulfonated polyolefin latex comprising:
(A) a chlorosulfonated polyolefin;
(B) a surfactant having an anionic moiety and a nonionic moiety, the nonionic moiety containing a polyoxyalkylene chain, and the anionic moiety containing a carboxylic acid salt, a sulfonic acid salt, a carbonic acid ester salt, a sulfuric acid ester salt, or a phosphoric acid ester salt;
(C) at least one surfactant selected from the group consisting of an amino acid-based surfactant, an alkyl aryl sulfonic acid-based surfactant, an alkyl sulfuric acid-based surfactant, and a sulfosuccinic acid-based surfactant; and
(D) an aqueous dispersion medium.

## Description

### Technical Field

The present disclosure relates to a chlorosulfonated polyolefin latex and the like. More specifically, the present disclosure relates to a chlorosulfonated polyolefin latex for dip molding, and the like. The present disclosure also relates to a dip-molded article produced using the chlorosulfonated polyolefin latex, and the like.

### Background Art

Rubber gloves are widely used for, for example, housework, various industrial applications such as the food industry and the electronic component manufacturing industry, and medical purposes. Coagulation dipping for producing rubber gloves from a latex is widely used as a method for producing rubber gloves. For example, Patent Literature (PTL) 1 discloses a method for producing gloves, comprising preparing a hand-shaped mold corresponding to the three-dimensional shape of a glove, treating the surface of the hand-shaped mold with a coagulant, such as an aqueous calcium nitrate solution, dipping the treated hand-shaped mold into a dip liquid containing a nitrile rubber latex, and removing the hand-shaped mold to adhere rubber particles to the surface of the hand-shaped mold, followed by drying and crosslinking, thereby producing a glove.

Chlorosulfonated polyolefins have excellent resistance to strong acids and strong alkalis, and are thus used as materials for protective gloves for work processes that use a large amount of highly hazardous chemicals, such as plating, semiconductor manufacturing, and dyeing processes. Chlorosulfonated polyolefin rubber gloves are generally produced by dipping a glove-shaped mold in a solution of a rubber in an organic solvent, followed by drying and vulcanizing (e.g., PTL 2). However, from the viewpoint of environmental protection, there is a demand for a method for producing gloves using a rubber latex, whereby the use of an organic solvent during glove production is not required.

As a method for producing gloves using a chlorosulfonated polyolefin latex, for example, PTL 3 discloses a method for producing a dip-molded article by dipping a mold having calcium ions adhered thereto into a chlorosulfonated polyethylene latex containing sodium alginate, κ-carrageenan, or pectin.

### Citation List

### Patent Literature

PTL 1: WO2015/146974
PTL 2: JPH05-230702A
PTL 3: JP7033242B
PTL 4: WO2012/141020

### Summary of Invention

### Technical Problem

However, sodium alginate etc. have a thickening effect. From the viewpoint of freely controlling viscosity, it is preferable to be able to produce a dip-molded article using a latex that does not contain sodium alginate or the like. An object of one aspect of the present disclosure is to provide a method for producing a dip-molded article comprising a chlorosulfonated polyolefin without using sodium alginate or the like, a latex that can be used in the method, and a dip-molded article comprising a chlorosulfonated polyolefin that does not need to contain sodium alginate or the like.

### Solution to Problem

The present disclosure includes, for example, the subject matter described in the following items.

### Item 1

A chlorosulfonated polyolefin latex comprising:
(A) a chlorosulfonated polyolefin;
(B) a surfactant having an anionic moiety and a nonionic moiety, the nonionic moiety containing a polyoxyalkylene chain, and the anionic moiety containing a carboxylic acid salt, a sulfonic acid salt, a carbonic acid ester salt, a sulfuric acid ester salt, or a phosphoric acid ester salt;
(C) at least one surfactant selected from the group consisting of an amino acid-based surfactant, an alkyl aryl sulfonic acid-based surfactant, an alkyl sulfuric acid-based surfactant, and a sulfosuccinic acid-based surfactant; and
(D) an aqueous dispersion medium.

### Item 2

The latex according to Item 1, for use in dip molding.

### Item 3-1

The latex according to Item 1 or 2, wherein the content of (C) is 1 to 10 parts by mass per 100 parts by mass of (A).

### Item 3-2

The latex according to Item 1, 2, or 3-1, wherein the content of (B) is 0.3 to 12 parts by mass per 100 parts by mass of (A).

### Item 4-1

The latex according to any one of Items 1 to 2, 3-1, and 3-2, wherein
the amino acid-based surfactant is at least one amino acid-based surfactant selected from the group consisting of a glutamic acid-based surfactant, an alanine-based surfactant, a sarcosine-based surfactant, a glycine-based surfactant, an aspartic acid-based surfactant, and a taurine-based surfactant;
the alkyl aryl sulfonic acid-based surfactant is an alkyl aryl sulfonic acid-based surfactant in which the alkyl is linear or branched C₈-C₁₈ alkyl, and the aryl is phenylene or naphthylene;
the alkyl sulfuric acid-based surfactant is at least one alkyl sulfuric acid-based surfactant selected from the group consisting of an alkyl sulfuric acid salt-based surfactant and a polyoxyalkylene sulfonic acid-based surfactant; and
the sulfosuccinic acid-based surfactant is at least one sulfosuccinic acid-based surfactant selected from the group consisting of a monoalkyl sulfosuccinic acid-based surfactant, a dialkyl sulfosuccinic acid-based surfactant, and an alkylalkenyl sulfosuccinic acid-based surfactant.

### Item 4-2

The latex according to any one of Items 1 to 2, 3-1, and 3-2, wherein the surfactant (C) is at least one member selected from the group consisting of an alanine-based surfactant, a taurine-based surfactant, an alkylbenzene sulfonic acid-based surfactant, an alkyl sulfuric acid salt-based surfactant, a polyoxyalkylene sulfonic acid salt-based surfactant, a monoalkyl sulfosuccinic acid salt-based surfactant, a dialkyl sulfosuccinic acid salt-based surfactant, and an alkylalkenyl sulfosuccinic acid salt-based surfactant.

### Item 4-3

The latex according to any one of Items 1 to 2, 3-1, and 3-2, wherein the surfactant (C) is at least one surfactant selected from the group consisting of an N-C₈-C₁₈ aliphatic acylmethylalanine salt, an N-C₈-C₁₈ aliphatic acylmethyltaurine salt, a linear alkylbenzene sulfonic acid salt having C₈-C₁₈ alkyl, an alkyl sulfuric acid salt in which the alkyl is linear or branched C₈-C₁₈ alkyl, a polyoxyalkylene sulfonic acid salt, a mono-C₈-C₁₈ alkyl sulfosuccinic acid salt, a di-C₈-C₁₈ alkyl sulfosuccinic acid salt, and a C₈-C₁₈ alkyl C₂-C₆ alkenyl sulfosuccinic acid salt.

### Item 5

The latex according to any one of Items 1 to 2, 3-1 to 3-2, and 4-1 to 4-3, wherein the chlorosulfonated polyolefin is chlorosulfonated polyethylene.

### Item 6-1

The latex according to any one of Items 1 to 2, 3-1 to 3-2, 4-1 to 4-3, and 5, wherein the surfactant (B) is a compound represented by formula (I):

R¹-O-(CH₂CHR²-O)ₙ-R³ (I)

wherein R¹ represents a group represented by R^{1a}- or a group represented by R^{1a}-R^{1b}-, R^{1a}- represents C₆-C₂₀ alkyl, -R^{1b}-represents phenylene, n represents an integer of 2 to 40, each R² is the same and different and represents hydrogen or methyl, R³ represents -SO₃M or -COOM, and M represents an alkali metal.

### Item 7

A dip-molded article formed by dip-molding the latex of any one of Items 1 to 2, 3-1 to 3-2, 4-1 to 4-3, and 5 to 6 using a polyvalent metal salt as a coagulant.

### Item 8

The dip-molded article according to Item 7, which has a thickness of 0.1 mm or more.

### Item 9

The dip-molded article according to Item 7, wherein the dip-molded article is a glove.

### Item 10

A method for producing a dip-molded article, comprising:
mixing a latex with (C) at least one surfactant selected from the group consisting of an amino acid-based surfactant, an alkyl aryl sulfonic acid-based surfactant, an alkyl sulfuric acid-based surfactant, and a sulfosuccinic acid-based surfactant to prepare a composition for dip molding, the latex comprising (A) a chlorosulfonated polyolefin, (B) a surfactant having an anionic moiety and a nonionic moiety, the nonionic moiety containing a polyoxyalkylene chain, and the anionic moiety containing a carboxylic acid salt, a sulfonic acid salt, a carbonic acid ester salt, a sulfuric acid ester salt, or a phosphoric acid ester salt, and (D) an aqueous dispersion medium;
adhering a coagulant to a surface of a mold having a desired shape; and
dipping the mold with the coagulant adhered thereto into the composition for dip molding to form a coagulated film.

### Item 11

The method for producing a dip-molded article according to Item 10, further comprising:
removing the mold from the composition for dip molding and washing the coagulated film; and
heating the coagulated film.

### Advantageous Effects of Invention

Provided are a method for producing a dip-molded article comprising a chlorosulfonated polyolefin without using sodium alginate, a latex that can be used in the method, and a dip-molded article comprising a chlorosulfonated polyolefin that does not need to contain sodium alginate. This enables a dip-molded article that is preferably excellent in strength and chemical resistance to be produced in a simple manner.

### Description of Embodiments

Each embodiment encompassed by the present disclosure is described in more detail below. The present disclosure preferably encompasses a chlorosulfonated polyolefin latex, use thereof, a production method therefor, and the like. However, the present disclosure is not limited thereto and includes everything disclosed in the present specification and recognizable to those skilled in the art.

The chlorosulfonated polyolefin latex encompassed by the present disclosure comprises (A) a chlorosulfonated polyolefin, (B) a surfactant having an anionic moiety and a nonionic moiety, the nonionic moiety containing a polyoxyalkylene chain, and the anionic moiety containing a carboxylic acid salt, a sulfonic acid salt, a carbonic acid ester salt, a sulfuric acid ester salt, or a phosphoric acid ester salt, (C) at least one surfactant selected from the group consisting of an amino acid-based surfactant, an alkyl aryl sulfonic acid-based surfactant, an alkyl sulfuric acid-based surfactant, and a sulfosuccinic acid-based surfactant, and (D) an aqueous dispersion medium. The chlorosulfonated polyolefin latex encompassed by the present disclosure may be referred to below as "the latex of the present disclosure." These components may be referred to as "the components (A) to (D)."

The chlorosulfonated polyolefin, which is the component (A), is obtained by chlorinating and chlorosulfonating a polyolefin. Examples of polyolefins include polymers or copolymers of α-olefins, copolymers of α-olefins and other polymerizable components, and the like.

Examples of α-olefins include ethylene, propylene, 1-butene, 1-pentene, 1-hexene, 4-methyl-1-pentene, 1-octene, 1-decene, and the like. Examples of the other polymerizable components include chain-like dienes, such as isoprene, 1,3-butadiene, 1,4-hexadiene, 1,6-octadiene, and 2-methyl-1,5-hexadiene; cyclic dienes, such as 1,4-cyclohexadiene, dicyclopentadiene, 5-vinyl-2-norbornene, 5-ethylidene-2-norbornene, 5-methylene-2-norbornene, 5-isopropylidene-2-norbornene, and 6-chloromethyl-5-isopropenyl-2-norbornene; vinyl compounds, such as vinyl acetate, vinyl chloride, acrylonitrile, styrene, methyl acrylate, and methyl methacrylate; and the like.

The chlorosulfonated polyolefin is preferably a chlorosulfonated α-olefin polymer. In the chlorosulfonated α-olefin polymer, one type of α-olefin may be used alone or two or more types of α-olefins may be used. When two or more types of α-olefins are used, it is preferable that one is ethylene.

Specific examples of chlorosulfonated polyolefins include chlorosulfonated polyethylene, chlorosulfonated ethylene-α-olefin copolymers, chlorosulfonated α-olefin polymers, and the like. The "α-olefin" in the chlorosulfonated ethylene-α-olefin copolymers and chlorosulfonated α-olefin polymers refers to an α-olefin other than ethylene. The α-olefin other than ethylene is preferably, for example, propylene. That is, preferred examples of chlorosulfonated ethylene-α-olefin copolymers include chlorosulfonated ethylene propylene copolymers, and preferred examples of chlorosulfonated α-olefin polymers include chlorosulfonated propylene polymers.

The chlorosulfonated polyolefins may be used singly or in a combination of two or more.

The sulfur content of the chlorosulfonated polyolefin is preferably 0.5 mass% or more, and more preferably 0.8 mass% or more. The sulfur content of the chlorosulfonated polyolefin is also preferably 2.0 mass% or less, and more preferably 1.5 mass% or less. The sulfur content of the chlorosulfonated polyolefin is also preferably 0.5 to 2.0 mass%, and more preferably 0.8 to 1.5 mass%.

The chlorine content of the chlorosulfonated polyolefin of the present disclosure is not particularly limited, and is preferably 10 mass% or more, and more preferably 20 mass% or more. The chlorine content of the chlorosulfonated polyolefin of the present disclosure is also preferably 50 mass% or less, and more preferably 40 mass% or less. The chlorine content of the chlorosulfonated polyolefin of the present disclosure is also preferably 10 to 50 mass%, and more preferably 20 to 40 mass%.

The sulfur content and chlorine content of the chlorosulfonated polyolefin are the content of sulfur and the content of chlorine contained in the chlorosulfonated polyolefin, respectively, and can be measured by an oxygen flask combustion method.

Examples of the method for chlorinating and chlorosulfonating a polyolefin include a solution method in which a polyolefin is dissolved in an organic solvent, and a reaction is performed in a homogeneous system; a suspension method in which a polyolefin is suspended in a solvent, and a reaction is performed; a melt method in which a reaction is performed with a polyolefin in a molten state; a gas phase method in which a polyolefin is suspended in a gas phase, and a reaction is performed; and the like. Among these, the solution method is preferred from the viewpoint of homogeneous chlorination and chlorosulfonation. Examples of chlorinating agents and chlorosulfonating agents that can be used include a combination of chlorine gas and sulfurous acid gas, a combination of chlorine gas and sulfuryl chloride, sulfuryl chloride alone, and the like. The chlorosulfonation reaction can be performed by using a chlorinating agent, a chlorosulfonating agent, and a radical generator, and if necessary, a co-catalyst, such as pyridine.

As the chlorosulfonated polyolefin, commercially available products may be used. Examples of commercially available products include those under the trade names "TOSO-CSM" and "extos" (chlorosulfonated polyethylene) (Tosoh Corporation), and the like.

The content of the component (A) in the latex of the present disclosure is, for example, preferably about 20 to 60 mass%, more preferably about 25 to 55 mass%, and even more preferably about 30 to 50 mass%.

The surfactant that is the component (B) is a surfactant having an anionic moiety and a nonionic moiety, the nonionic moiety containing a polyoxyalkylene chain, and the anionic moiety containing a carboxylic acid salt, a sulfonic acid salt, a carbonic acid ester salt, a sulfuric acid ester salt, or a phosphoric acid ester salt (among which, a carbonic acid ester salt or a sulfuric acid ester salt is preferable). Examples of the salts include alkali metal salts (in particular, sodium salts and potassium salts), ammonium salts, amine salts, and the like, with alkali metal salts being preferable.

For example, the polyoxyalkylene is preferably polyoxyethylene, polyoxypropylene, or polyoxyethylene polyoxypropylene, and particularly preferably polyoxyethylene. The number of moles of alkylene oxide added (repeating number) is preferably an integer of 2 to 40 (2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40).

The component (B) is more preferably a surfactant having a polyoxyalkylene alkyl ether structure or a polyoxyalkylene alkyl phenyl ether structure.

The "alkyl ether" in the polyoxyalkylene alkyl ether structure is, for example, preferably a C₆-C₂₀ (6, 7, 8, 9, 10, 11, 12, 13, 14, 15, 16, 17, 18, 19, or 20) alkyl ether. The "alkyl phenyl ether" in the polyoxyalkylene alkyl phenyl ether structure is preferably one in which phenylene (in particular, 1,4- phenylene) is present between alkyl and oxygen in the "alkyl ether" described above.

More specifically, the component (B) is particularly preferably a compound represented by the following formula (I). R¹-O-(CH₂CHR²-O)ₙ-R³ (I)

In formula (I), R¹ represents a group represented by R^{1a}- or a group represented by R^{1a}-R^{1b}-, R^{1a}- represents C₆-C₂₀ (6, 7, 8, 9, 10, 11, 12, 13, 14, 15, 16, 17, 18, 19, or 20) alkyl, and -R^{1b}- represents phenylene (preferably 1,4-phenylene).

R² represents hydrogen or methyl. n is the number of moles of alkylene oxide added, and is an integer of 2 to 40, preferably an integer of 2 to 35, and even more preferably an integer of 2 to 20.

R³ represents -SO₃M or -COOM. M represents an alkali metal, preferably sodium (Na) or potassium (K).

In formula (I), the polyoxyalkylene unit represented by (CH₂CHR²-O)n may contain two types of polyoxyalkylenes having different R², i.e., polyoxyethylene ((CH₂CH₂-O)x) and polyoxypropylene ((CH₂CH(CH₃)-O)y) so that the sum of x and y is n.

In formula (I), when R¹ represents a group represented by R^{1a}-, and R³ represents -SO₃M, formula (I) represents a polyoxyalkylene alkyl ether sulfate. Specific examples of the polyoxyalkylene alkyl ether sulfate include polyoxyethylene alkyl ether sulfates, such as sodium polyoxyethylene lauryl ether sulfate, sodium polyoxyethylene tridecyl ether sulfate, sodium polyoxyethylene myristyl ether sulfate, and sodium polyoxyethylene oleyl ether sulfate; polyoxypropylene alkyl ether sulfates, such as sodium polyoxypropylene lauryl ether sulfate, sodium polyoxypropylene tridecyl ether sulfate, sodium polyoxypropylene myristyl ether sulfate, and sodium polyoxypropylene oleyl ether sulfate; and polyoxyethylene polyoxypropylene alkyl ether sulfates, such as sodium polyoxyethylene polyoxypropylene lauryl ether sulfate and sodium polyoxyethylene polyoxypropylene tridecyl ether sulfate. Among these, sodium polyoxyethylene lauryl ether sulfate, sodium polyoxyethylene tridecyl ether sulfate, sodium polyoxyethylene myristyl ether sulfate, sodium polyoxypropylene lauryl ether sulfate, sodium polyoxypropylene tridecyl ether sulfate, sodium polyoxyethylene polyoxypropylene lauryl ether sulfate, and sodium polyoxyethylene polyoxypropylene tridecyl ether sulfate are preferable. These may be used singly or in a combination of two or more.

One type of polyoxyalkylene alkyl ether sulfate represented by formula (I) may be used singly or two or more types of polyoxyalkylene alkyl ether sulfates represented by formula (I) may be used in combination. When one type of polyoxyalkylene alkyl ether sulfate is used, the polyoxyalkylene alkyl ether sulfate is particularly preferably a polyoxyalkylene alkyl ether sulfate in which, in formula (I), n is an integer of 2 to 20. When two or more types of polyoxyalkylene alkyl ether sulfates are used in combination, the polyoxyalkylene alkyl ether sulfates preferably comprise a polyoxyalkylene alkyl ether sulfate (I-A) in which, in formula (I), n is an integer of 9 to 35, and a polyoxyalkylene alkyl ether sulfate (I-B) in which, in formula (I), n is an integer of 2 to 8. The polyoxyalkylene alkyl ether sulfate (I-A) and the polyoxyalkylene alkyl ether sulfate (I-B) are preferably selected so that the difference in n in formula (I) is 8 to 30, and more preferably selected so that the difference in n in formula (I) is 10 to 20.

When the polyoxyalkylene alkyl ether sulfate (I-A) and the polyoxyalkylene alkyl ether sulfate (I-B) are used in combination, the polyoxyalkylene alkyl ether sulfates comprise the polyoxyalkylene alkyl ether sulfate (I-B) in an amount of preferably 0.1 to 5 parts by mass, and more preferably 0.3 to 3 parts by mass, per part by mass of the polyoxyalkylene alkyl ether sulfate (I-A).

In the latex of the present disclosure, the content of the component (B) is preferably set to 0.3 to 12 parts by mass per 100 parts by mass of the chlorosulfonated polyolefin (A). When the amount of the component (B) for use is less than 0.3 parts by mass, the static stability and mechanical stability of the resulting latex may decrease. The range of parts by mass described above (0.3 to 12 parts by mass) is more preferably 0.5 to 10 parts by mass, and even more preferably 1 to 5 parts by mass.

As described above, the surfactant that is the component (C) is at least one surfactant selected from the group consisting of an amino acid-based surfactant, an alkyl aryl sulfonic acid-based surfactant, an alkyl sulfuric acid-based surfactant, and a sulfosuccinic acid-based surfactant.

The amino acid-based surfactant is preferably a compound having a structure in which a fatty acid and an amino acid salt are bonded via amide bonding. Preferred examples of the fatty acid include coconut oil fatty acids and C₈-C₁₈ (C₈, C₉, C₁₀, C₁₁, C₁₂, C₁₃, C₁₄, C₁₅, C₁₆, C₁₇, or C₁₈) linear or branched fatty acids. Preferred examples of the amino acid include glutamic acid, aspartic acid, glycine, alanine, methylalanine, sarcosine, methyltaurine, and the like. Preferred examples of the salt include alkali metal salts, with sodium salts or potassium salts being more preferable, and sodium salts being even more preferable.

Specific examples of amino acid-based surfactants include glutamic acid-based surfactants, such as N-coconut oil fatty acid glutamic acid salts, N-lauroyl glutamic acid salts, and N-myristoyl glutamic acid salts; alanine-based surfactants, such as N-coconut oil fatty acid alanine salts, N-lauroyl alanine salts, N-coconut oil fatty acid methylalanine salts, and N-lauroyl methylalanine salts; sarcosine-based surfactants, such as N-coconut oil fatty acid sarcosine salts and N-lauroyl sarcosine salts; glycine-based surfactants, such as N-coconut oil fatty acid glycine salts and N-lauroyl glycine salts; aspartic acid-based surfactants, such as N-coconut oil fatty acid aspartic acid salts, N-lauroyl aspartic acid salts, and N-myristoyl aspartic acid salts; taurine-based surfactants, such as N-coconut oil fatty acid methyltaurine salts, N-lauroyl methyltaurine salts, N-myristoyl methyltaurine salts, and N-stearoyl methyltaurine salts; and the like. Preferred examples of the salts include alkali metal salts, with sodium salts or potassium salts being more preferable, and sodium salts being even more preferable. Among these, from the viewpoint of coagulation efficiency, at least one member selected from the group consisting of an alanine-based surfactant and a taurine-based surfactant is preferable, and at least one member selected from the group consisting of sodium N-C₈-C₁₈ aliphatic acyl methyl alaninate and sodium N-C₈-C₁₈ aliphatic acyl methyl taurate is particularly preferable.

The alkyl aryl sulfonic acid-based surfactant is preferably an alkyl aryl sulfonic acid-based surfactant having C₈-C₁₈ (C₈, C₉, C₁₀, C₁₁, C₁₂, C₁₃, C₁₄, C₁₅, C₁₆, C₁₇, or C₁₈) linear or branched (preferably linear) alkyl. The aryl is preferably benzene or naphthalene (i.e., phenylene or naphthylene is preferable; phenylene is more preferably 1,4-phenylene; and naphthylene is more preferably 1,4-naphthylene). More specific examples include linear or branched alkylbenzene sulfonic acid-based surfactants, such as octylbenzene sulfonic acid salts, decylbenzene sulfonic acid salts, undecylbenzene sulfonic acid salts, dodecylbenzene sulfonic acid salts, and tetradecylbenzene sulfonic acid salts; linear or branched alkylnaphthalene sulfonic acid-based surfactants, such as butylnaphthalene sulfonic acid salts, octylnaphthalene sulfonic acid salts, decylnaphthalene sulfonic acid salts, and dodecylnaphthalene sulfonic acid salts; and the like. Preferred examples of the salts include alkali metal salts, with sodium salts or potassium salts being more preferable, and sodium salts being even more preferable. Among these, from the viewpoint of coagulation efficiency, linear alkylbenzene sulfonic acid salts having C₈-C₁₈ alkyl are preferable, and linear alkylbenzene sulfonic acid salts having C₁₀-C₁₆ alkyl are particularly preferable.

The alkyl sulfuric acid-based surfactant may be an alkyl sulfuric acid salt-based surfactant and is preferably an alkyl sulfuric acid salt having C₈-C₁₈ (C₈, C₉, C₁₀, C₁₁, C₁₂, C₁₃, C₁₄, C₁₅, C₁₆, C₁₇, or C₁₈) linear or branched alkyl, and more preferably an alkyl sulfuric acid salt having linear alkyl. Specific examples include linear alkyl sulfuric acid salt-based surfactants, such as octyl sulfuric acid salts, decyl sulfuric acid salts, undecyl sulfuric acid salts, dodecyl sulfuric acid salts (lauryl sulfuric acid salts), α-olefin (C₁₂-C₁₄) sulfuric acid salts, α-olefin (C₁₄-C₁₆) sulfuric acid salts, and stearyl sulfuric acid salts; branched alkyl sulfuric acid salt-based surfactants, such as 2-ethylhexyl sulfuric acid salts and isostearyl sulfuric acid salts; and the like. Preferred examples of the salts include alkali metal salts, with sodium salts or potassium salts being more preferable, and sodium salts being even more preferable. Among these, from the viewpoint of coagulation efficiency, C₈-C₁₈ linear alkyl sulfuric acid salts are preferable, and C₁₀-C₁₄ linear alkyl sulfuric acid salts are particularly preferable.

The alkyl sulfuric acid-based surfactant may be one in which some of the methylene groups in the alkyl chain may be replaced with ether bonds (-O-), and also include, for example, one whose alkyl chain takes the form of polyoxyalkylene chain. The alkyl sulfuric acid-based surfactant also includes a polyoxyalkylene sulfonic acid-based surfactant, may be a polyoxyalkylene sulfonic acid salt-based surfactant, and preferably includes, among these, a polyoxyalkylene sulfonic acid salt (in particular, a polyoxyalkylene monosulfonic acid salt and a polyoxyalkylene disulfonic acid salt).

The sulfosuccinic acid-based surfactant may be a monoalkyl sulfosuccinic acid-based surfactant, a dialkyl sulfosuccinic acid-based surfactant, or an alkylalkenyl sulfosuccinic acid-based surfactant. Examples include monoalkyl sulfosuccinic acid salt-based surfactants, such as monolauryl sulfosuccinic acid salts and monococonut oil fatty acid sulfosuccinic acid salts; dialkyl sulfosuccinic acid salt-based surfactants, such as diisobutyl sulfosuccinic acid salts, dihexyl sulfosuccinic acid salts, dioctyl sulfosuccinic acid salts, di(2-ethylhexyl)sulfosuccinic acid salts, and dinonyl sulfosuccinic acid salts; and alkylalkenyl sulfosuccinic acid salt-based surfactants, such as octylallyl sulfosuccinic acid salts, 2-ethylhexylallyl sulfosuccinic acid salts, nonylallyl sulfosuccinic acid salts, and dodecylallyl sulfosuccinic acid salts; and the like. Preferred examples of the salts include alkali metal salts, with sodium salts or potassium salts being more preferable, and sodium salts being even more preferable. Among these, from the viewpoint of coagulation efficiency, at least one member selected from the group consisting of a mono-C₈-C₁₈ alkyl sulfosuccinic acid salt, a di-C₈-C₁₈ alkyl sulfosuccinic acid salt, and a C₈-C₁₈ alkyl C₂-C₆ alkenyl sulfosuccinic acid salt is particularly preferable.

The surfactant that is the component (C) may be appropriately synthesized or may be a commercially available product. As described above, the surfactants that are the component (C) may be used singly or in a combination of two or more.

The component (C) is more preferably at least one member selected from the group consisting of a taurine-based surfactant, an alkylbenzene sulfonic acid-based surfactant, and a dialkyl sulfosuccinic acid-based surfactant.

The latex of the present disclosure may contain a surfactant other than the component (B) and the component (C) as long as the effects of the invention of the present disclosure are not impaired. Examples of such other surfactants include alkyl sulfonic acid-based surfactants, such as nonane sulfonic acid salts and dodecane sulfonic acid salts; fatty acid-based surfactants, such as oleic acid salts, stearic acid salts, and myristic acid salts; alkylenedisulfonic acid-based surfactants, such as polyoxypropylenedisulfonic acid salts and polyoxypropylenedisulfonic acid salts; rosin-based surfactants, such as rosin acid salts, hydrogenated rosin acid salts, and disproportionated rosin acid salts; sulfated oil-and-fat-based surfactants, such as sulfated castor oil, sulfated beef tallow, and sulfated rapeseed oil; and the like.

In the latex of the present disclosure, the content of the component (C) is preferably 0.5 to 12 parts by mass per 100 parts by mass of the component (A). The upper or lower limit of this range may be, for example, 1, 1.5, 2, 2.5, 3, 3.5, 4, 4.5, 5, 5.5, 6, 6.5, 7, 7.5, 8, 8.5, 9, 9.5, 10, 10.5, 11, or 11.5. For example, this range is more preferably 1 to 10 parts by mass, and even more preferably 2 to 8 parts by mass.

The aqueous dispersion medium, which is the component (D), is, for example, preferably water. The content of the component (D) in the latex of the present disclosure can be appropriately set depending on, for example, the degree of emulsification and viscosity of the latex. For example, the latex of the present disclosure may contain the component (D) in an amount of preferably 60 mass% or more, and more preferably 65 mass% or more or 70 mass% or more. The component (D) can be used as the balance of the components other than the component (D), to adjust the content of each component while making the total latex 100 mass%.

As described above, the latex of the present disclosure can be preferably used for preparing a dip-molded article comprising a chlorosulfonated polyolefin even if it does not contain sodium alginate or the like. However, this does not exclude further adding sodium alginate or the like to the components (A) to (D). In other words, the latex of the present disclosure preferably encompasses those that do not contain sodium alginate or the like. More specifically, it is preferable that the latex of the present disclosure does not contain alginic acid or a salt thereof (in particular, sodium salt), carrageenan (in particular, κ-carrageenan), or pectin.

An example of a method for producing the latex of the present disclosure is a method including preparing a latex containing the component (A), the component (B), and the component (D), and then adding the component (C) to the latex. For convenience, the latex containing the component (A), the component (B), and the component (D) before the addition of the component (C) is sometimes referred to as "precursor latex."

The method for producing the precursor latex includes a method including melting the component (A) and dispersing the melted component (A) in an aqueous dispersion medium containing the component (B), and a method including dissolving the component (A) in an organic solvent, then dispersing the component (A) solution in an aqueous dispersion medium containing the component (B), and then removing the organic solvent. The organic solvent removed can be easily recovered and reused. The component (B) in this context can act as an emulsifier. The latter method is preferred from the viewpoint of ease of controlling the particle size of the component (A) in the obtained latex.

Examples of methods for dispersing the component (A) in an aqueous dispersion medium using an organic solvent include phase inversion emulsification, in which an aqueous dispersion medium is added to a solution of the component (A) in an organic solvent to form a water-in-oil (W/O) emulsion, and the phase is reversed to an oil-in-water (O/W) emulsion by adding water; and forced emulsification, in which a solution of the component (A) in an organic solvent is mechanically dispersed in water in the presence of the component (B) by using an emulsifying device. These methods may be used singly or in combination.

The organic solvent is not particularly limited as long as the organic solvent is capable of dissolving the component (A) and is immiscible with water. Examples of organic solvents include aliphatic hydrocarbon solvents, such as hexane, heptane, and cyclohexane; aromatic hydrocarbon solvents, such as benzene, toluene, and xylene; chlorinated hydrocarbon solvents, such as chloroform, and 1,2-dichloroethane; alcohol solvents, such as 1-butanol, and isobutanol; ester solvents, such as ethyl acetate, isopropyl acetate, and n-butyl acetate; ketone solvents, such as methyl ethyl ketone, and methyl isobutyl ketone; and ether solvents, such as diisopropyl ether, dibutyl ether, and anisole. These organic solvents may be used singly or in a combination of two or more kinds.

The amount of the organic solvent used is not particularly limited. The amount of the organic solvent is preferably set so that the concentration of the component (A) in a composition, prepared by dissolving the component (A) in an organic solvent, is 5 to 25 mass%, and more preferably 8 to 20 mass%.

The amount of the component (B) used is not particularly limited. The amount of the component (B) is preferably 0.3 to 12 parts by mass, more preferably 0.5 to 10 parts by mass, and particularly preferably 1 to 5 parts by mass, per 100 parts by mass of the component (A).

The emulsifying device for use may be a known device, such as a paddle mixer, a planetary mixer, a homogenizing mixer, a homogenizer, or a dispersion mixer. The emulsifying device may be of a batch type or a continuous type.

Although the temperature during emulsification depends on the type of the organic solvent used and cannot be generalized, the temperature is typically about 5 to 70°C.

The organic solvent can be removed from the emulsion obtained according to the method above, for example, by distillation under normal pressure, reduced pressure, or increased pressure. At this time, water can be simultaneously removed as necessary to adjust the concentration of the component (A) in the latex. In this organic solvent removal operation, an antifoaming agent may be used to limit foaming caused by an emulsifier. Examples of antifoaming agents include mineral oil-based antifoaming agents, silicone-based antifoaming agents, acetylene-based antifoaming agents, metal soap-based antifoaming agents, acrylic-based antifoaming agents, and fluorine-based antifoaming agents. Of these, acetylene-based antifoaming agents are preferred. These antifoaming agents may be used singly or in a combination of two or more kinds. The amount of the antifoaming agent used depends on the amount of the component (B) used. The amount of the antifoaming agent is preferably 100 to 2000 ppmwt (100×10⁻⁶ to 2000×10⁻⁶ parts by mass) per 100 parts by mass of the component (A). The antifoaming agent may be added to the emulsion before the removal operation, or may be added appropriately during the removal operation. The method for adding the antifoaming agent for use may be a method of adding the antifoaming agent all at once, a method of adding the antifoaming agent dropwise, a method of spraying the antifoaming agent, or the like. When water is removed to further adjust the concentration after the organic solvent removal, water can be removed by an operation such as distillation, centrifugation, membrane separation, or filtration.

The precursor latex for use may be a commercially available product. An example of a commercially available product is Sepolex-CSM-N (trade name, Sumitomo Seika Chemicals Co., Ltd).

The latex of the present disclosure can be prepared, for example, by adding the component (C) to the precursor latex.

The amount of the component (C) added is preferably 0.5 to 12 parts by mass, more preferably 1 to 10 parts by mass, and even more preferably 2 to 8 parts by mass, per 100 parts by mass of the component (A) in the precursor latex.

The latex of the present disclosure may further contain known additives, such as rheology modifiers, anti-aging agents, antifoaming agents, pH adjusters, chelating agents, vulcanizing agents, vulcanization accelerators, vulcanization acceleration aids, acid acceptors, film-forming aids, plasticizers, fillers, pigments, and thickeners, to the extent that the effects of the invention according to the present disclosure are not impaired.

Examples of rheology modifiers include polysaccharides, such as cellulose, cellulose nanofiber, cellulose nanocrystal, hydroxyethyl cellulose, hydroxypropyl cellulose, hydroxypropyl methyl cellulose, carboxymethyl cellulose, chitin, chitosan, guar gum, and xanthan gum; water-soluble vinyl polymers, such as polyacrylic acid, sodium polyacrylate, crosslinked polyacrylic acid, polyacrylamide, polyvinyl alcohol, polyvinyl methyl ether, and polyvinylpyrrolidone; and clay minerals, such as montmorillonite, nontronite, saponite, beidellite, and hectorite.

Examples of anti-aging agents include phenol-based anti-aging agents, such as dibutylhydroxytoluene, 2,2'-methylenebis(4-ethyl-6-tert-butylphenol), and 2,5-di-tert-butylhydroquinone; amine-based anti-aging agents, such as N-phenyl-1-naphthylamine and di(4-octylphenyl)amine; phosphorus-based anti-aging agents, such as tris(nonylphenyl)phosphite; sulfur-based anti-aging agents, such as dilauryl thiodipropionate, 2-mercaptobenzimidazole, and nickel dibutyldithiocarbamate; and bisphenol A-type epoxy resins.

Examples of antifoaming agents include fat-and-oil-based antifoaming agents, mineral oil-based antifoaming agents, silicone-based antifoaming agents, and polyether-based antifoaming agents.

Examples of pH adjusters include sodium hydroxide, potassium hydroxide, sodium carbonate, potassium carbonate, ammonia, trimethylamine, triethanolamine, hydrochloric acid, sulfuric acid, phosphoric acid, citric acid, and acetic acid.

Examples of chelating agents include ethylenediaminetetraacetic acid, nitrilotriacetic acid, trans-1,2-diaminocyclohexanetetraacetic acid, diethylenetriaminepentaacetic acid, bis(aminoethyl)glycol ether-N,N,N',N'-tetraacetic acid, N-(2-hydroxyethyl)ethylenediamine-N,N',N'-triacetic acid, dihydroxyethylglycine, 1-hydroxyethane-1,1-diphosphonic acid, gluconic acid, citric acid, malic acid, and tartaric acid.

Examples of vulcanizing agents include sulfur, such as powdered sulfur, flowers of sulfur, precipitated sulfur, and colloidal sulfur; organic peroxides, such as di-tert-butyl peroxide and dicumyl peroxide; maleimide compounds, such as N,N'-m-phenylene bismaleimide; quinoid compounds, such as p-quinone dioxime and p,p'-dibenzoylquinone dioxime; metal compounds, such as magnesium oxide and lead oxide; and polyhydric alcohol compounds, such as pentaerythritol, dipentaerythritol, sorbitol, and trimethylolpropane.

Examples of vulcanization accelerators include diethyldithiocarbamic acid, dibutyldithiocarbamic acid, diphenyldithiocarbamic acid, sodium diethyldithiocarbamate, sodium dibutyldithiocarbamate, sodium diphenyldithiocarbamate, zinc diethyldithiocarbamate, zinc dibutyldithiocarbamate, zinc diphenyldithiocarbamate, 2-mercaptobenzothiazole, zinc 2-mercaptobenzothiazole, di-2-benzothiazolyl disulfide, 2-(4'-morpholinodithio)benzothiazole, trimethylthiourea, N,N'-diethylthiourea, 1,3-diphenylguanidine, 1,3-di-o-tolylguanidine, N-cyclohexyl-2-benzothiazolylsulfenamide, N-oxydiethylene-2-benzothiazolylsulfenamide, tetramethylthiuram disulfide, tetraethylthiuram disulfide, tetramethylthiuram monosulfide, dipentamethylenethiuram tetrasulfide, and zinc isopropylxanthate.

Examples of vulcanization acceleration aids include metal oxides, such as zinc oxide and magnesium oxide, and fatty acids, such as stearic acid and palmitic acid.

Examples of acid acceptors include metal oxides, such as lead oxide, magnesium oxide, zinc oxide, and calcium oxide; metal hydroxides, such as magnesium hydroxide, calcium hydroxide, and aluminum hydroxide; clay minerals, such as hydrotalcite; and epoxy compounds, such as phenyl glycidyl ether, bisphenol A diglycidyl ether, epoxidized soybean oil, epoxidized linseed oil, epoxidized polybutadiene, and polyglycidyl methacrylate.

Examples of film-forming aids include propylene glycol, propylene glycol monomethyl ether, propylene glycol monoethyl ether, propylene glycol monopropyl ether, ethylene glycol monoethyl ether, ethylene glycol monopropyl ether, ethylene glycol monoisopropyl ether, ethylene glycol mono n-butyl ether, ethylene glycol mono-isobutyl ether, ethylene glycol mono-tert-butyl ether, ethylene glycol monophenyl ether, diethylene glycol monoethyl ether, diethylene glycol monopropyl ether, diethylene glycol monoisopropyl ether, diethylene glycol mono n-butyl ether, diethylene glycol mono-isobutyl ether, diethylene glycol mono-tert-butyl ether, diethylene glycol monophenyl ether, diethylene glycol dimethyl ether, diethylene glycol methyl ethyl ether, triethylene glycol monobutyl ether, triethylene glycol dimethyl ether, tetraethylene glycol dimethyl ether, dipropylene glycol mono n-butyl ether, dipropylene glycol dimethyl ether, tripropylene glycol monomethyl ether, and 2,2,4-trimethyl-1,3-pentanediol monoisobutyrate.

Examples of plasticizers include phthalic esters, adipic esters, glycerin fatty acid esters, polyether polyols, and polyester polyols.

Examples of fillers include carbon fibers, cellulose fibers, carbon black, silica, talc, clay, calcium carbonate, titanium oxide, and barium sulfate.

Examples of pigments include carbon black, titanium oxide, chromium oxide, iron blue, amber, nickel titanium yellow, viridian, cobalt blue, phthalocyanine blue, phthalocyanine green, molybdenum orange, chrome yellow, anthraquinone, and quinacridone.

When the latex of the present disclosure contains additives, the amount of additives is not particularly limited. The amount of additives is preferably 5 to 30 parts by mass per 100 parts by mass of the solids content in the latex composition (i.e., the component (A)).

The method for preparing the latex of the present disclosure is not particularly limited. Examples of the methods include a method including mixing the precursor latex with the component (C), optionally with various other additives, by using a dispersing machine, such as a ball mill, a bead mill, a kneader, or a disperser; a method including preparing an aqueous dispersion containing the component (C) and optional various other additives beforehand by using a dispersing machine, and then mixing the aqueous dispersion with the precursor latex; a method including mixing the precursor latex with the component (C) and some of the additives, and then mixing the mixture with an aqueous dispersion of other additives; and a method including mixing some of the additives with the precursor latex, and then mixing the mixture with an aqueous dispersion of the component (C) and other additives.

The pH of the latex of the present disclosure is preferably 5 or higher, and more preferably within the range of 7 to 12, from the viewpoint of facilitating coagulation.

The solids concentration of the latex of the present disclosure is preferably 20 to 60 mass%, and more preferably 25 to 50 mass%.

The viscosity of the latex of the present disclosure at 25°C is preferably 20 to 300 mPa·s, more preferably 30 to 200 mPa·s, and particularly preferably 50 to 100 mPa·s. A viscosity falling within this range makes it easy to obtain a film with a uniform thickness in dip molding. The viscosity in the present disclosure is a value as measured using a Brookfield viscometer with rotor No. 1 or No. 2 at 60 rpm, one minute after the start of the measurement.

The latex of the present disclosure can be preferably used for dip molding. In other words, the latex of the present disclosure can be preferably used as a composition for dip molding.

The latex of the present disclosure may be subjected to maturation (also called "prevulcanization") before being subjected to dip molding. The maturation time can be appropriately set according to the type of additives and the maturation temperature. The maturation time is, for example, preferably 1 to 7 days, and more preferably 1 to 3 days. The maturation temperature is preferably 10 to 50°C, and more preferably 20 to 40°C.

After maturation, the matured latex is preferably stored at a temperature of 30°C or lower until use in dip molding.

The particle size of the component (A) contained in the latex of the present disclosure is not particularly limited. The volume-based median particle size measured with a laser diffraction particle size distribution analyzer is preferably 0.1 to 10 µm, more preferably 0.3 to 5 µm, and particularly preferably 0.5 to 2.0 µm. A particle size falling within this range makes it easier to obtain a dense film upon coagulation. The particle size can be adjusted, for example, by varying the type and amount of the organic solvent and emulsifier used in preparing the precursor latex, the amount of water used, and the operating conditions of the emulsifying device. Alternatively, the particle size can also be adjusted by varying the amount of the component (C) used in preparing the latex of the present disclosure from the precursor latex, the type and amount of known additives optionally used, or the preparation method.

To increase the stability of the latex of the present disclosure, additives, such as dispersion stabilizers (e.g. polyvinyl alcohol, polyvinylpyrrolidone, and hydroxyethyl cellulose) and stabilizers (e.g. dibutyl hydroxytoluene, 2,5-di-tert-butyl hydroquinone, and bisphenol A-type epoxy resin) may be added. Such additives may, for example, be added to the precursor latex, or may be added to the organic solvent solution or water used in emulsification during the preparation of the precursor latex depending on the type of additives. Alternatively, additives may be added beforehand to the component (A), which serves as a starting material. The additives are usually preferably added in the form of an aqueous solution or aqueous dispersion of each of the additives or of a mixture of the additives. When additives are added, the amount of additives is preferably 0.1 to 10 parts by mass in total per 100 parts by mass of the component (A).

The present disclosure also encompasses a dip-molded article obtained by using the latex of the present disclosure as a composition for dip molding.

Dip molding is a method including dipping a mold (forming mold) in a composition for dip molding, allowing the composition to deposit on the surface of the mold, then withdrawing the mold from the composition, and then drying the composition deposited on the surface of the mold. The following describes in more detail a method usable in preparing a dip-molded article of the present disclosure.

The mold used in dip molding may be a mold that is integrally formed from ceramic, metal, glass, plastic, or the like so as to conform to a desired three-dimensional shape. The surface of the mold may have a pearskin finish, or may have other materials such as textile or a different type of rubber coating according to the intended use of the dip-molded article. The mold may be preheated before being dipped in the composition for dip molding.

It is preferable to use a coagulant to coagulate the solids content mainly composed of a chlorosulfonated polyolefin (which may also be referred to as "rubber component") before dipping the mold in a composition for dip molding or after withdrawing the mold from the composition for dip molding. Methods of using a coagulant include a method including dipping a mold that has yet to be dipped in the composition for dip molding in a solution of a coagulant ("coagulant solution" below) in order to allow the coagulant to adhere to the mold, and a method including dipping a mold on which the composition for dip molding has been deposited in a coagulant solution. From the viewpoint of obtaining a dip-molded article with minimal unevenness in thickness, it is preferable to use a method including dipping a mold that has yet to be dipped in the composition for dip molding in a solution of a coagulant in order to allow the coagulant to adhere to the mold.

The coagulant may be a metal salt, and more preferably a water-soluble metal salt. Of the metal salts, from the viewpoint of high coagulation power, polyvalent metal salts that generate polyvalent metal ions are preferred, and water-soluble polyvalent metal salts are more preferred. Examples of water-soluble metal salts include metal halides, such as sodium chloride, potassium chloride, barium chloride, calcium chloride, magnesium chloride, zinc chloride, and aluminum chloride; metal nitrates, such as sodium nitrate, potassium nitrate, barium nitrate, calcium nitrate, zinc nitrate, and aluminum nitrate; metal acetates, such as sodium acetate, potassium acetate, barium acetate, calcium acetate, zinc acetate, and aluminum acetate; and metal sulfates, such as sodium sulfate, potassium sulfate, calcium sulfate, magnesium sulfate, and aluminum sulfate. The polyvalent metal as used herein is preferably an alkaline earth metal, and more preferably calcium, barium, or magnesium, with calcium being more preferred. The coagulant is particularly preferably calcium chloride and calcium nitrate from the viewpoint of high solubility in water. These coagulants may be used singly or in a combination of two or more kinds.

The coagulant is preferably used in the form of an aqueous solution. This aqueous solution may further contain a water-soluble organic solvent, such as methyl alcohol or ethyl alcohol, and a nonionic surfactant. The concentration of the coagulant solution is not particularly limited, and is preferably 5 to 50 mass%, more preferably 10 to 40 mass%, and particularly preferably 15 to 35 mass%. The time for dipping the mold in the coagulant solution is not particularly limited, and is typically preferably 5 to 300 seconds, and more preferably 10 to 100 seconds.

After the mold is dipped in the coagulant solution to allow the coagulant solution to adhere to the surface, the solvent of the coagulant solution may be removed by drying. The drying temperature can be appropriately set according to the type of the solvent and salt used. The drying temperature is preferably 60 to 150°C, and more preferably 80 to 120°C. The drying time is also not particularly limited, and is preferably 1 to 600 seconds, and more preferably 5 to 300 seconds. Drying the coagulant solution on the surface of the mold makes it easier to bring the mold into a state in which the salt is uniformly adhered to the surface of the mold.

The time for dipping the mold in the latex of the present disclosure (composition for dip molding) may be appropriately set according to a desired thickness (film thickness). The time for dipping is preferably 5 to 600 seconds, and more preferably 10 to 300 seconds.

After the mold is taken out from the composition for dip molding, the mold is typically heated to dry the coagulated film formed on the mold surface. The drying method is not particularly limited, and drying can be performed using a hot air heater, an infrared heater, a microwave heater, a high-frequency heater, or the like. The drying temperature at this stage is not particularly limited, and is preferably 50 to 160°C, more preferably 60 to 140°C, and particularly preferably 70 to 120°C. The drying time is not particularly limited, and is preferably 1 to 120 minutes, more preferably 10 to 100 minutes, and particularly preferably 20 to 60 minutes.

Optionally, the mold may be further heated to vulcanize the coagulated film formed on the mold surface. The heating conditions during vulcanization are not particularly limited, and are preferably 60 to 200°C, more preferably 80 to 180°C, and particularly preferably 100 to 160°C. Keeping the heating temperature within this range achieves an appropriate vulcanization speed, and prevents the deterioration of the rubber component due to excessive heating. The heating time for vulcanization may be appropriately selected according to the heating temperature, and is typically 5 to 120 minutes. The heating method for use can be, for example, the same as the heating method described above.

Additionally, before or after heating the mold on which the composition for dip molding has been deposited, it is preferable to wash the mold with water or warm water to remove water-soluble impurities (e.g., an excess emulsifier, surfactant, coagulant, uncoagulated latex, etc.). The temperature of the water or warm water used is preferably 20 to 80°C, and more preferably 30 to 70°C. The washing time is preferably about 0.5 to 60 minutes.

After drying (and optional vulcanization), the dip-molded article is removed from the mold. The removal method includes a method of peeling the dip-molded article from the mold by hand, a method of peeling the dip-molded article from the mold using a peeling roller, and a method of peeling the dip-molded article by using water pressure or compressed air pressure. The dip-molded article may be further washed with water after being removed from the mold. Furthermore, optionally, in order to prevent the adhesion at the contact surfaces of the dip-molded articles and to improve the smoothness in wearing and taking off the dip-molded articles, fine inorganic particles, such as talc or calcium carbonate, or fine organic particles, such as cornstarch, may be applied to the surface, or an elastomer layer containing fine particles may be further formed on the surface, or the surface layer may be chlorinated.

The film thickness of the thus-obtained dip-molded article is, for example, preferably 0.1 to 2 mm, more preferably 0.2 to 1.5 mm, and particularly preferably 0.3 to 1.0 mm. The film thickness can be appropriately set by adjusting the dipping time, etc., as described above.

In the present specification, the term "comprising" includes the concepts of consisting essentially of and consisting of. Additionally, the present disclosure encompasses any and all combinations of the technical elements described herein.

Additionally, the various characteristics (properties, structures, functions, etc.) described in each embodiment of the present disclosure above may be combined in any way to identify the subject matter encompassed by the present disclosure. Specifically, the present disclosure encompasses all subject matter composed of each and every possible combination of the characteristics described herein.

### Examples

The present disclosure is explained below in detail with reference to Examples and Comparative Examples. However, the present disclosure is in no way limited to these Examples.

The surfactants used in the Examples and Comparative Examples are listed below.
A: Sodium alkyl (C₁₀-C₁₆) benzenesulfonate (NOF Corporation, trade name: Newrex R, solids concentration: 50 mass%)
B: Sodium di-2-ethylhexyl sulfosuccinate (NOF Corporation, trade name: Rapisol A-80, solids concentration: 80 mass%)
C: Sodium N-acylmethyltaurate (NOF Corporation, trade name: Diapon S, solids concentration: 13 mass%)
D: Sodium alkylaryl sulfosuccinate (Sanyo Chemical Industries, Ltd., trade name: Eleminol JS-20, solids concentration: 40 mass%)
E: Sodium lauryl sulfate (Tokyo Chemical Industry Co., Ltd., reagent, solids concentration: 97 mass%)
F: Sodium polyoxyalkylene disulfonate (Nippon Nyukazai Co., Ltd., trade name: Newcol 240, solids concentration: 30 mass%)
G: Disodium lauryl sulfosuccinate (Sanyo Chemical Industries, Ltd., trade name: Beaulight SSS, solids concentration: 40 mass%)
H: Sodium N-lauroylmethylalanine (NOF Corporation, trade name: Softilt AS-L, solids concentration: 30 mass%)
I: Potassium oleate (NOF Corporation, trade name: Nonsoul OK-1, solids concentration: 80 mass%)
J: Sodium salt of β-naphthalenesulfonic acid formalin condensate (Kao Corporation, trade name: Demol N, solids concentration: 100 mass%)
K: Lauryldimethylaminoacetic acid betaine (NOF Corporation, trade name: Nissananon BL, solids concentration: 35 mass%)
L: Potassium rosinate (Arakawa Chemical Industries, Ltd., trade name: Rondis K-25, solids concentration: 25 mass%)

In the Examples and Comparative Examples, the "parts by mass" of the individual surfactants is a value per 100 parts by mass of a chlorosulfonated polyolefin in a chlorosulfonated polyolefin latex (specifically, trade name: Sepolex-CSM-N (chlorosulfonated polyethylene) Sumitomo Seika Chemicals Co., Ltd., solids concentration: 40 mass%). The "Parts Added [phr]" (per hundred rubber) in Table 1 indicates the value.

Surfactant products A to L listed above vary in the concentration of the surfactant (solids concentration) contained, and the value indicated by parts by mass of each surfactant in the Examples is a value determined from the surfactant amount converted based on the solids concentration. For example, as described below, a chlorosulfonated polyethylene latex (Sepolex-CSM-N) with a solids concentration of about 40 mass% was used in Example 1, and 2.5 parts by mass of a sodium alkyl (C₁₀-C₁₆) benzenesulfonate product (Newrex R) with a solids concentration of 50 mass% was used for the chlorosulfonated polyethylene latex. In this case, assuming that the amount of Sepolex-CSM-N used was α parts by mass, the amount of the chlorosulfonated polyethylene would be 0.4α parts by mass, and the amount of the sodium alkyl (C₁₀-C₁₆) benzenesulfonate would be represented by 0.4α × 2.5/100 = 0.01α parts by mass. In addition, the amount of Newrex R used was 0.01α/0.5=0.02α parts by mass. In other words, the number of parts added [phr] in Table 1 indicates the parts by mass of the surfactant contained in the surfactant product used per 100 parts by mass of a chlorosulfonated polyolefin contained in a chlorosulfonated polyolefin latex used.

Sepolex-CSM-N is a latex composition containing 40 mass% of a chlorosulfonated polyethylene, about 60 mass% of water, and a small amount (about 0.1 to 2 mass%) of polyoxyalkylene alkyl ether sulfate, which is an emulsifier.

### Evaluation Method

### Evaluation of Coagulation (Coagulated or Not)

Whether a latex was coagulated was evaluated as "o" when the film thickness was 0.1 mm or more, indicating that coagulation had occurred, and "×" when the film thickness was less than 0.1 mm, indicating that coagulation had not occurred.

### Film Strength

A test specimen in the shape of a dumbbell of JIS No. 4 was punched out from the obtained film. A tensile test was performed by using an autograph (Shimadzu Corporation, trade name: AGS-X) at a measurement temperature of 25°C and a tensile rate of 300 mm/min to measure strength at break and elongation at break.

### Chemical Resistance of Film

A test specimen of 1 cm square was cut from the obtained film, and a pH test paper (Whatman, pH test paper, type: SR) was attached to the back side of the test specimen. One drop of 95% sulfuric acid (reagent, Fujifilm Wako Pure Chemical Corporation) was dropped on the front side of the film, which was then left to stand for 1 hour. The change in the pH test paper after 1 hour was observed. No change in color of the pH test paper was evaluated as "o," indicating that sulfuric acid had not penetrated, and a change in color of the pH test paper detected was evaluated as "×," indicating that sulfuric acid had penetrated.

### Example 1

### Adjusting Composition for Dip Molding

To a chlorosulfonated polyethylene latex (Sumitomo Seika Chemicals Co., Ltd., trade name: Sepolex-CSM-N, solids concentration: 40 mass%), 2.5 parts by mass of sodium alkyl (C₁₀-C₁₆) benzenesulfonate (NOF Corporation, trade name: Newrex R) was added per 100 parts by mass of chlorosulfonated polyethylene contained in the latex, and the mixture was stirred until complete dissolution, thereby obtaining a composition for dip molding. The viscosity of the obtained composition for dip molding at 25°C was 56 mPa·s.

### Production of Dip-molded Article

A ceramic mold was dipped in a 35 mass% aqueous calcium nitrate solution for 5 seconds and then dried in an air dryer at 120°C for 5 minutes. Thereafter, the ceramic mold was dipped in the composition for dip molding for 30 seconds to allow the rubber component to adhere to the ceramic mold, and then the ceramic mold was taken out from the composition for dip molding. The ceramic mold with the rubber component adhered thereto was dried in an air dryer at 70°C for 4 hours, and then dipped in warm water at 60°C for 1 hour to remove the water-soluble component. Thereafter, the ceramic mold was dried at 70°C for 1 hour and further heated at 120°C for 20 minutes. After cooling to room temperature, the film was peeled off from the ceramic mold to obtain a dip-molded article. The obtained dip-molded article was evaluated according to the following criteria. The ceramic mold used was boat-shaped with dimensions of 10 cm × 1.5 cm × 1 cm (length × width × depth), and a film (dip-molded article) was obtained by performing the procedure described above by using this mold.

### Examples 2 to 15

Dip-molded articles were obtained in the same manner as in Example 1, except that the components added, amounts thereof, and dipping time were changed as shown in Table 1. In Examples 11 to 15, after surfactant 1 was added to a chlorosulfonated polyethylene latex, surfactant 2 was further added thereto, followed by stirring until complete dissolution, thereby obtaining a composition for dip molding.

### Comparative Example 1

A composition for dip molding was prepared without adding anything to a chlorosulfonated polyethylene latex (Sumitomo Seika Chemicals Co., Ltd., trade name: Sepolex-CSM-N, solids concentration: 40 mass%).

### Comparative Examples 2 to 5

Dip-molded articles were obtained in the same manner as in Example 1, except that the components added, amounts thereof, and dipping time were changed as shown in Table 1.

**Table 1**

| | Surfactant 1 | | Surfactant 2 | | Viscosity (mPa · s) | Dipping Time (sec) | Film Thickness (mm) | Coagulated or Not |
|---|---|---|---|---|---|---|---|---|
| | Surfactant | Parts Added (phr) | Surfactant | Parts Added (phr) | | | | |
| Example 1 | A | 2.5 | - | - | 56 | 30 | 0.12 | ○ |
| Example 2 | A | 5.0 | - | - | 77 | 30 | 0.16 | ○ |
| Example 3 | A | 7.5 | - | - | 90 | 30 | 0.20 | ○ |
| Example 4 | A | 7.5 | - | - | 90 | 300 | 0.35 | ○ |
| Example 5 | A | 7.5 | - | - | 90 | 600 | 0.42 | ○ |
| Example 6 | B | 5.0 | - | - | 27 | 30 | 0.16 | ○ |
| Example 7 | B | 7.5 | - | - | 32 | 30 | 0.20 | ○ |
| Example 8 | B | 7.5 | - | - | 32 | 300 | 0.38 | ○ |
| Example 9 | C | 5.0 | - | - | 45 | 30 | 0.10 | ○ |
| Example 10 | D | 5.0 | - | - | 67 | 30 | 0.12 | ○ |
| Example 11 | B | 2.5 | E | 2.5 | 52 | 180 | 0.17 | ○ |
| Example 12 | A | 2.5 | E | 2.5 | 86 | 180 | 0.17 | ○ |
| Example 13 | F | 2.5 | E | 2.5 | 56 | 300 | 0.11 | ○ |
| Example 14 | G | 2.5 | A | 2.5 | 55 | 300 | 0.17 | ○ |
| Example 15 | H | 2.5 | A | 2.5 | 52 | 300 | 0.15 | ○ |
| Comparative Example 1 | - | - | - | - | 32 | 30 | 0.01 | × |
| Com parative Example 2 | I | 5.0 | - | - | 30 | 30 | 0.04 | × |
| Comparative Example 3 | J | 5.0 | - | - | 20 | 30 | 0.01 | × |
| Comparative Example 4 | K | 5.0 | - | - | 37 | 30 | 0.04 | × |
| Comparative Example 5 | L | 5.0 | - | - | 45 | 30 | 0.05 | × |

### Examples 16 and 17

### Preparation of Composition for Dip Molding

To a chlorosulfonated polyethylene latex (Sumitomo Seika Chemicals Co., Ltd., trade name: Sepolex-CSM-N, solids concentration: 40 mass%), 7.5 parts by mass of a surfactant of the composition shown in Table 2 was added, and the mixture was stirred until the surfactant was completely dissolved or dispersed. The expression "7.5 parts by mass" means the same as the number of parts added [phr] in Table 1, and indicates the parts by mass of the surfactant contained in the surfactant product used per 100 parts by mass of the chlorosulfonated polyolefin contained in the chlorosulfonated polyolefin latex used.

Thereafter, 3 parts by mass of an aqueous sodium dibutyldithiocarbamate solution (Ouchi Shinko Chemical Industrial Co., Ltd., trade name: Nocceler TP) on a solids content basis and 10 parts by mass of triethylene glycol monobutyl ether (Nippon Nyukazai Co., Ltd., trade name: Butyl Tri Glycol) were added, and the mixture was stirred until the mixture became homogenous, thereby obtaining a composition for dip molding. The viscosity of the obtained composition for dip molding at 25°C was 121 mPa·s.

### Production of Dip-molded Article

A ceramic mold was dipped in a 35 mass% aqueous calcium nitrate solution for 5 seconds and then dried in an air dryer at 120°C for 5 minutes. Thereafter, the ceramic mold was dipped in the composition for dip molding for 5 minutes to allow the rubber component to adhere to the ceramic mold, and then the ceramic mold was taken out of the composition for dip molding. The ceramic mold with the rubber component adhered thereto was dried in an air dryer at 70°C for 4 hours, and then further heated at 120°C for 20 minutes. After cooling to room temperature, the film was peeled off from the ceramic mold, thereby obtaining a dip-molded article. The obtained dip-molded article was evaluated according to the criteria described above. The ceramic mold used was a rectangle with dimensions of 20 cm × 8 cm, and a film (dip-molded article) was obtained by performing the procedure described above by using this mold.

**Table 2**

| | Surfactant | Viscosity (mPa·S) | Film Thickness (mm) | Coagulated or Not | Strength at Break (MPa) | Elongation at Break (%) | Chemical Resistance |
|---|---|---|---|---|---|---|---|
| Example 16 | A | 121 | 0.31 | ○ | 19.2 | 635 | ○ |
| Example 17 | B | 112 | 0.35 | ○ | 24.6 | 645 | ○ |

The results above revealed that adding a specific surfactant to a chlorosulfonated polyolefin latex allows the latex to coagulate, and thus provides a dip-molded article having excellent strength and chemical resistance.

### Industrial Applicability

Provided are a method for producing a dip-molded article comprising a chlorosulfonated polyolefin without using sodium alginate, a latex that can be used in the method, and a dip-molded article comprising a chlorosulfonated polyolefin that does not need to contain sodium alginate. This simplifies the production of a dip-molded article preferably having excellent strength and chemical resistance, and also enables the production of a dip-molded article such as gloves without using an organic solvent during dip molding, which is beneficial for environmental protection.

## Claims

1. A chlorosulfonated polyolefin latex comprising:
(A) a chlorosulfonated polyolefin;
(B) a surfactant having an anionic moiety and a nonionic moiety, the nonionic moiety containing a polyoxyalkylene chain, and the anionic moiety containing a carboxylic acid salt, a sulfonic acid salt, a carbonic acid ester salt, a sulfuric acid ester salt, or a phosphoric acid ester salt;
(C) at least one surfactant selected from the group consisting of an amino acid-based surfactant, an alkyl aryl sulfonic acid-based surfactant, an alkyl sulfuric acid-based surfactant, and a sulfosuccinic acid-based surfactant; and
(D) an aqueous dispersion medium.

2. The latex according to claim 1, for use in dip molding.

3. The latex according to claim 1 or 2, wherein the content of (C) is 1 to 10 parts by mass per 100 parts by mass of (A) .

4. The latex according to claim 1 or 2, wherein
the amino acid-based surfactant is at least one amino acid-based surfactant selected from the group consisting of a glutamic acid-based surfactant, an alanine-based surfactant, a sarcosine-based surfactant, a glycine-based surfactant, an aspartic acid-based surfactant, and a taurine-based surfactant,
the alkyl aryl sulfonic acid-based surfactant is an alkyl aryl sulfonic acid-based surfactant in which the alkyl is linear or branched C₈-C₁₈ alkyl, and the aryl is phenylene or naphthylene,
the alkyl sulfuric acid-based surfactant is at least one alkyl sulfuric acid-based surfactant selected from the group consisting of an alkyl sulfuric acid salt-based surfactant and a polyoxyalkylene sulfonic acid-based surfactant, and
the sulfosuccinic acid-based surfactant is at least one sulfosuccinic acid-based surfactant selected from the group consisting of a monoalkyl sulfosuccinic acid-based surfactant, a dialkyl sulfosuccinic acid-based surfactant, and an alkylalkenyl sulfosuccinic acid-based surfactant.

5. The latex according to claim 1 or 2, wherein the chlorosulfonated polyolefin is chlorosulfonated polyethylene.

6. The latex according to claim 1 or 2, wherein the surfactant (B) is a compound represented by formula (I):
R¹-O-(CH₂CHR²-O)ₙ-R³ (I)
wherein R¹ represents a group represented by R^{1a}- or a group represented by R^{1a}-R^{1b}-, R^{1a}- represents C₆-C₂₀ alkyl, -R^{1b}- represents phenylene, n represents an integer of 2 to 40, each R² is the same or different and represents hydrogen or methyl, R³ represents -SO₃M or -COOM, and M represents an alkali metal.

7. A dip-molded article formed by dip-molding the latex of claim 1 or 2 using a polyvalent metal salt as a coagulant.

8. The dip-molded article according to claim 7, which has a thickness of 0.1 mm or more.

9. The dip-molded article according to claim 7, wherein the dip-molded article is a glove.

10. A method for producing a dip-molded article, comprising:
mixing a latex with (C) at least one surfactant selected from the group consisting of an amino acid-based surfactant, an alkyl aryl sulfonic acid-based surfactant, an alkyl sulfuric acid-based surfactant, and a sulfosuccinic acid-based surfactant to prepare a composition for dip molding, the latex comprising (A) a chlorosulfonated polyolefin, (B) a surfactant having an anionic moiety and a nonionic moiety, the nonionic moiety containing a polyoxyalkylene chain, and the anionic moiety containing a carboxylic acid salt, a sulfonic acid salt, a carbonic acid ester salt, a sulfuric acid ester salt, or a phosphoric acid ester salt, and (D) an aqueous dispersion medium;
adhering a coagulant to a surface of a mold having a desired shape; and
dipping the mold with the coagulant adhered thereto into the composition for dip molding to form a coagulated film.
